# EUROPÄISCHE PATENTANMELDUNG

(11) **EP 1 459 665 A1**
(43) Veröffentlichungstag der Anmeldung: **22.09.2004**
(21) Anmeldenummer: 04405046.6
(22) Anmeldetag: 23.01.2004
(51) Int. Cl.: A47J 42/08

(54) **Gewürzmühle mit Mitteln zum stufenlosen Einstellen des Mahlgrades**

(30) Priorität: 20.03.2003 CH 4612003
(71) Anmelder: MOHA MODERNE HAUSHALTWAREN AG, CH-3052 Zollikofen (CH)
(72) Erfinder: Herren, Bruno, 6052 Hergiswil (CH)
(74) Vertreter: Patentanwälte Feldmann & Partner AG

(57) **Zusammenfassung**

Die Erfindung bezieht sich auf eine Konstruktionsverbesserung für die Einstellung der Feinheit der gemahlenen Partikel bei einer Gewürzmühle, insbesondere einer Pfeffermühle, wobei mittels einer entsprechenden Einführung eines rotierenden Sitzes und eines festen Sitzes zwischen einem konvexen Ringwulst und einer konkaven Ringnut es ermöglicht wird, dass ein rotierender Sitz sich vom festen Sitz nicht entfernt, während der rotierende Sitz eine Feinheitseinstellung von gemahlenen Partikeln vornimmt. Dies erfolgt, indem durch eine entsprechende Einführung von Speichen des Hebesitzes in Führungsnuten an der Innenwand des festen Sitzes es möglich gemacht wird, dass der rotierende Sitz in Drehung versetzt wird und dadurch die Hebebewegung und die Senkbewegung des Hebesitzes führt und die inneren Mahlzähne des Weiteren nach oben oder nach unten geschoben werden, um dadurch das Ziel einer Einstellung der Grösse und der Feinheit der gemahlenen Partikel zu erreichen.

## Beschreibung

Die Erfindung bezieht sich auf eine Konstruktionsverbesserung an einer Gewürzmühle zwecks Einstellung der Feinheit der gemahlenen Partikel und insbesondere auf eine innovative Konstruktion einer Pfeffermühle, bei welcher der Benützer in der Lage ist, die Grösse und die Feinheit der gemahlenen Pfefferpartikel einzustellen.

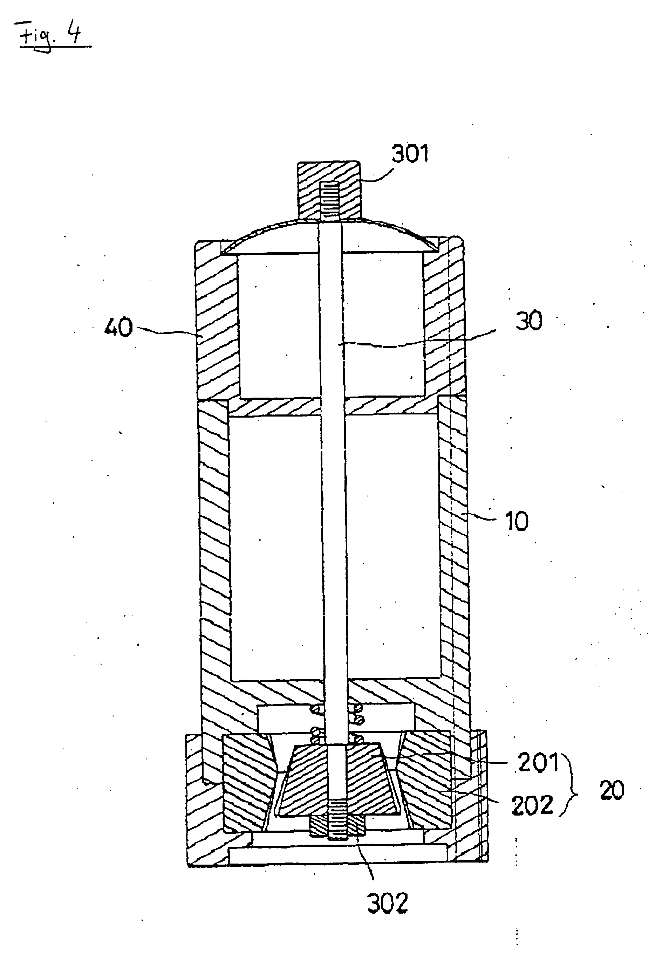

Eine konventionelle Pfeffermühle entspricht der in FIG. 4 im Schnitt dargestellten. Sie besteht aus einem Hohlkörper 10, welcher an seiner unteren Seite eine Mahlvorrichtung 20 aufweist, wobei die Mahlvorrichtung aus den inneren und äusseren Mahlzähnen 201, 202 besteht. Eine Verbindungsstange 30 ist vorgesehen, welche durch die inneren Mahlzähne 201 hindurch führt. Die beiden Enden der Verbindungsstange 30 ragen jeweils aus einer oberen Abschlusshaube 40 und aus den inneren Mahlzähnen 201, welche im Hohlkörper 10 angebracht sind heraus. Durch Anziehen der Muttern 301, 302 werden diese befestigt, so dass beim Drehen der oberen Abschlusshaube 40 die Verbindungsstange mitdreht und die inneren Mahlzähne 201 ebenfalls drehen, wodurch die Pfefferkörner gemahlen werden.

Wenn indessen die Grösse und die Feinheit der gemahlenen Pfefferkörnchen beim Mahlen eingestellt werden soll, dann ist dies mittels Hinein- oder Herausschrauben der Mutter 302, welche sich am unteren Ende der Verbindungsstange 30 befindet, möglich. Dadurch wird erreicht, dass die inneren Mahlzähne entsprechend hinauf oder hinunter bewegt werden und dadurch das Spiel zwischen den inneren 201 und äusseren 202 Mahlzähnen eingestellt wird, wodurch seinerseits das Ziel der Einstellung der Feinheit der gemahlenen Partikel erreicht wird.

Da jedoch die Mutter 302 nicht mit einem festen Anschlag an der Verbindungsstange festgemacht ist, ist es möglich, dass im Falle einer Fehlmanipulation beim Gebrauch die Mutter 302 herausfallen kann. Dies kann auch beim Drehen der oberen Abschlusshaube zum Mahlen der Pfefferkörner geschehen und schlimmstenfalls fällt infolgedessen die Mutter 302 in die zu würzende Speise, zum Beispiel eine Suppe, hinein.
Die Einstellung des Mahlgrades über die Manipulation der gezwungenermassen kleinen Mutter 302 ist zudem unpraktisch und überfordert das mechanische Geschick, gerade von älteren Menschen.
Die Mutter 302 wird bei jedem Mahlvorgang mit Partikeln des Mahlgutes verschmutzt und ein Verstellen des Mahlgrades ist nicht möglich ohne dass sich der Benutzer schmutzige Finger holt.

Es ist daher die Aufgabe der vorliegenden Erfindung eine Mühle zur Verfügung zu stellen, die diese Nachteile behebt.

Erfindungsgemäss wird diese Aufgabe durch eine Gewürzmühle mit neuen Verstellmitteln gelöst.

Im Folgenden werden anhand der beiliegenden Zeichnungen Ausführungsbeispiele der Erfindung beschrieben. Es zeigen:
FIG. 1: illustriert eine Explosionszeichnung einer Vorrichtung nach der Erfindung.
FIG. 2: illustriert einen Längsschnitt durch eine Gewürzmühle gemäss Figur 1 im zusammengebauten Zustand.
FIG. 3: stellt schematisch eine Detailansicht des Mahlwerkes und des Verstellmechanismus der Mühle nach Figur 1 und 2 im Längsschnitt dar.
FIG. 4: illustriert einen Längsschnitt einer konventionellen Konstruktion dar.

Das Hauptziel der Erfindung ist es, eine Konstruktionsverbesserung der Einstellvorrichtung zur Einstellung der Feinheit der gemahlenen Partikel bei einer Pfeffermühle zu erzielen. Diese wird erreicht durch die Einführung eines konvexen und eines konkaven Ringes zwischen dem rotierenden und dem festen Sitz. Wenn darauf der rotierende Sitz die Einstellung der Feinheit der gemahlenen Körnchen vornimmt, wird er nicht vom festen Sitz wegbewegt, währenddessen durch eine entsprechende Einführung eines Stiftes eines Hebesitzes in eine Führungsnute an der Innenwand der rotierende Sitz gedreht werden kann und dadurch tatsächlich die Hebe- und Senkbewegung des Hebesitzes geführt wird und so die inneren Mahlzähne weiter nach oben oder nach unten bewegt werden, um dadurch das Ziel der Einstellung der Grösse und der Feinheit der gemahlenen Körnchen zu erreichen.

### SPEZIFISCHES AUSFÜHRUNGSBEISPIEL

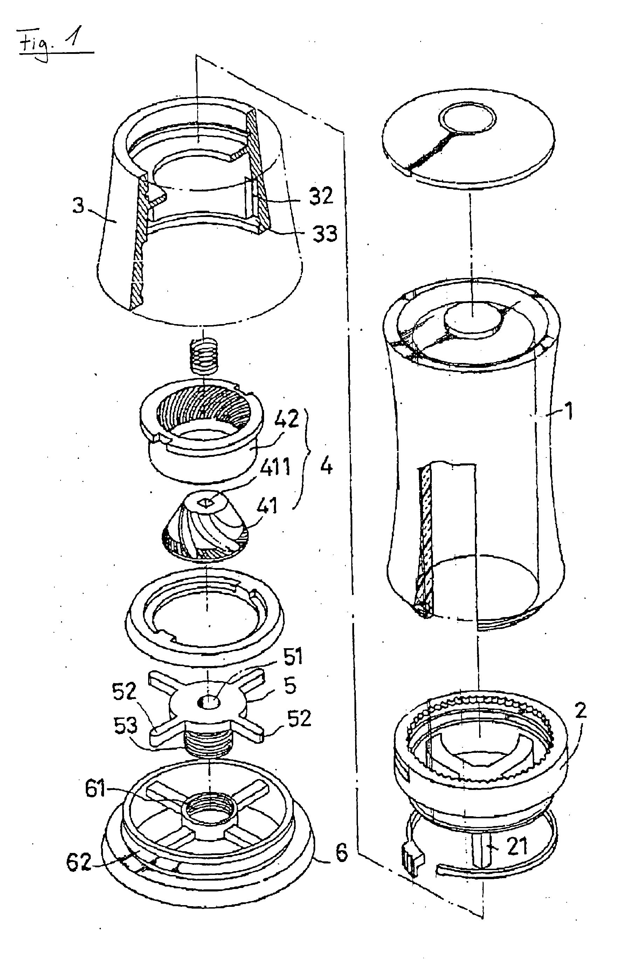

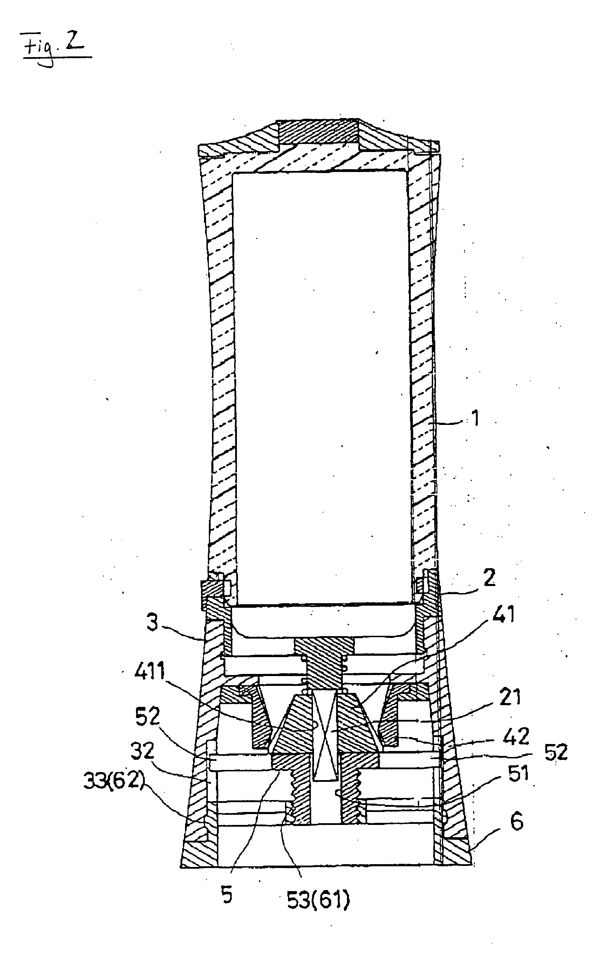

Mit Bezug auf die FIGUREN 1 und 2, welche jeweils eine in Einzelteile aufgelöste Darstellung und einen Längsschnitt der gesamten Konstruktion der Erfindung sind, besteht die Mühle erstens aus einem Gehäuse 1, einem Wellensitz 2, einem festen Sitz 3, einer Mahlvorrichtung 4, einem Hebesitz 5 und einem rotierenden Sitz 6, wobei das Gehäuse 1 ein hohler Behälter zur Aufnahme der Pfefferkörner ist und wobei dessen unteres Ende am Wellensitz 2 montiert, vorzugsweise mit diesem verschraubt, ist.

Ein Drehzapfen 21 verläuft von der Mitte des Wellensitzes 2 nach unten, wobei dieser Drehzapfen 21 im Querschnitt rechteckig ist und mit den inneren Mahlzähnen 41 in Wirkverbindung steht.
Das obere Ende eines festen Sitzes 3 ist mit dem Wellensitz 2 drehbar aber axial nicht verschiebbar verbunden. Äussere Mahlzähne 42 sind im Inneren des festen Sitzes 3 angeordnet. Ebenfalls vorgesehen an der inneren Oberfläche der Wand nahe bei der Unterseite des festen Sitzes 3 sind mehrere Führungsnuten 32. Darüber hinaus ist am unteren Teil der Führungsnuten 32 eine ringförmige, konkave umlaufende Einbuchtung 33 vorgesehen. Diese Einbuchtung 33 ermöglicht die entsprechende Einführung eines konvexen Ringes 62, welcher auf dem drehbaren Sitz 6 angeordnet ist.

Die Mahlvorrichtung 4 besteht aus den inneren Mahlzähnen 41 und den äusseren Mahlzähnen 42, wobei eine durchgehende Bohrung 411 in der Mitte der inneren Mahlzähne 41 vorgesehen ist. Diese durchgehende Bohrung 411 weist ebenfalls eine rechteckige Form auf, um ein entsprechendes Eindringen des Drehzapfens 21 möglich zu machen. Die äusseren Mahlzähne 42 sind dabei drehfest und in axialer Richtung nicht verschiebbar am festen Sitz 3 montiert, welcher dadurch in seinem Inneren die inneren Mahlzähne 41 aufweist.

In der Mitte des Hebesitzes 5 ist eine zentrale Bohrung 51 vorgesehen, wobei diese zentrale Bohrung nicht nur auf die durchgehende Bohrung 41 ausgerichtet ist, sondern der Drehzapfen 21 ebenfalls in diese Bohrung eindringt. Mehrere Speichen 52 verlaufen von der Peripherie des Hebesitzes 5 aus nach aussen, wobei jede Speiche 52 einer Führungsnute 32 des festen Sitzes 3 zugeordnet ist und im zusammengebauten Zustand in diese Führungsnute 32 eingreift.
Ein mit einem Gewinde versehener hohler Zapfen 53 ist in der Verlängerung nach unten von der Aussenseite der zentralen Bohrung 51 des Hebesitzes 5 vorgesehen. Er ist entsprechend mit der mit einem Gewinde versehenen Bohrung 61 des rotierenden Sitzes 6 verschraubbar.

Das Innengewinde 61 am zentralen Teil des rotierenden Sitzes 6 lässt sich entsprechend mit dem, mit einem Gewinde versehenen, Zapfen 53 des Hebesitzes 5 verschrauben. Ein konvexer Ringwulst 62 ist an der äusseren Ringwand des rotierenden Sitzes 6 vorgesehen, wobei der nach aussen gerichtete konvexe Ringwulst 62 entsprechend in den konkaven Ring 33 des festen Sitzes 3 einführbar ist.

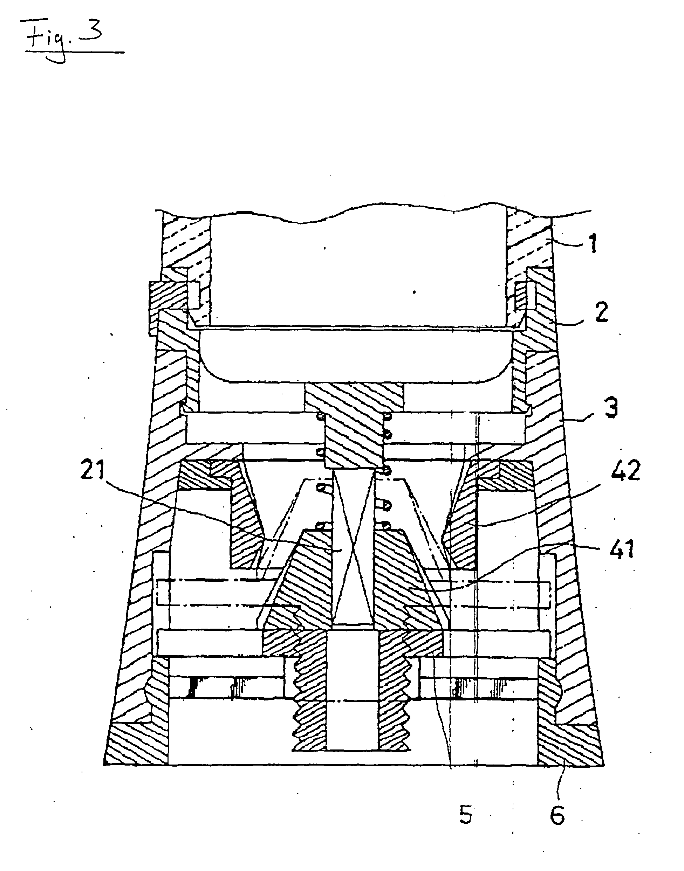

Mit Bezug dann auf die FIG. 3, welche eine schematische Darstellung der Feineinstellung des Mahlgrades ist, wird ein rotierender Sitz 6 illustriert, der im Uhrzeiger- oder im Gegenuhrzeigersinn rotiert. Die Einbaustellung des rotierenden Sitzes 6 ist in axialer Richtung fest. Die verschiedenen Speichen 52 auf dem Hebesitz sind mittels Führungsnuten 32 so geführt sind, dass sie im festen Sitz 3 innerhalb von bestimmten Grenzen auf- und ab-bewebewegt werden können. Wird der von aussen greifbare ringförmige rotierende Sitz 6 gedreht, so wird der Hebesitz 5 mittels der Gewindekonstruktion des Gewindezapfens 53 auf dem Hebesitz 5 und der mit einem Gewinde versehenen Bohrung 61 im rotierenden Sitz 6 entlang der Zentralachse stufenlos nach oben (oder nach unten) bewegt. Da die inneren Mahlzähne 41 auf dem Hebesitz 5 angeordnet sind, werden die Mahlzähne 41 infolge der Hebe- oder Senkbewegung des Sitzes 5 nach oben oder nach unten bewegt. Eine Feder drückt die inneren Mahlzähne dabei jeweils nach unten auf den Sitz 5. Durch die Änderung des Abstandes zwischen den inneren Mahlzähnen 41 und den äusseren Mahlzähnen 42 wird die stufenlose Einstellung für die Feinheit und die Grösse der beim Mahlen entstehenden Partikel erreicht.

Praxistests belegen, dass die Erfindung die folgenden Vorteile aufweist:
1. Da zwischen dem rotierenden Sitz und dem festen Sitz ein konvexer Wulst und eine konkave Ringnut vorgesehen sind, wird sichergestellt, dass bei der Einstellung des rotierenden Sitzes dieser rotierende Sitz sich nicht vom festen Sitz entfernt während er sich in Drehung befindet.
2. Da Führungsnuten für verschiedene Speichen auf dem entsprechenden Hebesitz auf dem festen Sitz vorgesehen sind, wird infolgedessen, wenn der rotierende Sitz sich dreht, um dadurch den Hebesitz nach oben oder nach unten zu drücken, eine lineare Bewegung des Hebesitzes sichergestellt und keine Auslenkung hervorgerufen.
3. Da der rotierende Sitz 6 von aussen greif- und drehbar ist, entfällt ein umständliches Hantieren mit einer kleinen, vom Mahlgut verschmutzten Mutter zur stufenlosen Einstellung des Mahlgrades.

Zusammenfassend wird festgestellt, dass eine Ausführungsform der vorliegenden Erfindung bei der Anwendung tatsächlich in der Lage ist, die vorgesehene Wirkung zu erreichen sowie dass die hier spezifisch offenbarte Konstruktion nicht nur in ähnlichen Erzeugnissen nicht vorhanden ist, sondern dass sie auch vorgängig zu dieser Patentanmeldung nicht offenbart worden ist. Daher sind die Bestimmungen und Anforderungen des Patentrechts in der Praxis vollständig erfüllt und deshalb wird gemäss diesem Recht eine Anmeldung eines neuartigen Patentes eingereicht in der Erwartung, dass diese wohlwollend geprüft und das Patent erteilt wird, welches vom Patentanmelder sehr geschätzt würde.

### Liste der Bezugszeichen

- 1: Gehäuse
- 2: Wellensitz
- 3: fester Sitz
- 4: Mahlvorrichtung
- 5: Hebesitz
- 6: drehbarer Sitz
- 10: Gehäuse (Stand der Technik; SdT)
- 20: Mahlvorrichtung (SdT)
- 21: Drehzapfen
- 30: Verbindungsstange (SdT)
- 32: Führungsnuten
- 33: konkave Einbuchtung
- 40: obere Abschlusshaube (SdT)
- 41: innere Mahlzähne
- 42: äussere Mahlzähne
- 51: zentrale Bohrung
- 52: Speichen
- 53: Gewindezapfen
- 61: Gewindebohrung
- 62: konvexer Ringwulst
- 63: Verstellring
- 201: innere Mahlzähne (SdT)
- 202: äussere Mahlzähne (SdT)
- 301,: 302 Muttern
- 411: Bohrung

## Patentansprüche

1. Gewürzmühle mit Mitteln für die Einstellung der Mahlfeinheit, bei welcher am unteren Ende eines Gehäuses (1) ein Wellensitz (2) angeordnet ist, wobei innere Mahlzähne (41) einer Mahlvorrichtung (4) in axialer Richtung verschiebbar auf einem nach unten ragenden Drehzapfen (21) des Wellensitzes (2) sitzen und von diesem in radialer Richtung antreibbar sind, und wobei unterhalb des Wellensitzes ein fester Sitz (3) drehbar angeordnet ist, wobei in diesem festen Sitz (3) äussere Mahlzähne (41) fest angeordnet sind, wobei die inneren Mahlzähne (41) mittels eines Hebesitzes (5) und eines drehbaren Sitzes (6) in axialer Richtung relativ zu den äusseren Mahlzähnen (42) verschiebbar sind.

2. Gewürzmühle nach Anspruch 1, **dadurch gekennzeichnet, dass** an einer Aussenwand des rotierenden Sitzes (6) ein konvexer Ringwulst (62) angeordnet ist der in eine konkave Ringnut (33) einer Innenwand am unteren Ende des festen Sitzes (3) einführbar ist, so dass die beiden Sitze drehbar aber in axialer Richtung fix miteinander verbunden sind.

3. Gewürzmühle nach Anspruch 1 oder 2, **dadurch gekennzeichnet, dass** der Hebesitz (5) eine Mehrzahl von gegen aussen verlaufenden Speichen (52), in einer Verlängerung gegen unten einen mit einem Gewinde versehenen Zapfen (53) und eine zentrale Bohrung (51) umfasst, wobei die Speichen in an der Innenwand des festen Sitzes (3) angeordneten Führungsnuten (32) geführt sind und der Gewindezapfen (53) in die mit einem Innengewinde versehene Bohrung (61) des rotierenden Sitzes (6) einschraubbar ist.

4. Gewürzmühle nach einem der vorhergehenden Ansprüche, **dadurch gekennzeichnet, dass** der rotierende Sitz (6) einen von aussen greifbaren Verstellring (63) umfasst, wobei dessen Drehung auf die mit einem Innengewinde versehene Bohrung (61) übertragen wird und mittels der Gewindekonstruktion des Gewindezapfens (53) in eine stufenlose Auf-, respektive Ab-Bewegung des Hebesitzes (5) entlang der Zentralachse umgewandelt wird, wodurch ein nach Oben oder Unten Schieben der inneren Mahlzähne (41) erfolgt, was wiederum zu einer Veränderung der Feinheit der gemahlenen Partikel führt.

5. Gewürzmühle nach einem der vorhergehenden Ansprüche, **dadurch gekennzeichnet, dass** der Drehzapfen (21) des Wellensitzes (2) und die entsprechende durchgehende Bohrung (411) der inneren Mahlzähne (41) einen polygonalförmigem, vorzugsweise einen rechteckigen Querschnitt aufweisen.
